# EUROPEAN PATENT SPECIFICATION

(11) **EP 0 608 396 B1**
(45) Date of publication and mention of the grant of the patent: **04.11.1998**
(21) Application number: 93916343.2
(22) Date of filing: 24.06.1993
(51) Int. Cl.: H04B 7/26, H04Q 7/00

(54) **METHOD FOR MEASURING COVERAGE IN MOBILE TELEPHONE NETWORKS**
VERFAHREN ZUR MESSUNG DER DECKUNGSFLÄCHE IN MOBILEN FUNKTELEFONNETZEN
PROCEDE DE MESURE DE LA ZONE DE COUVERTURE DANS LES RESEAUX RADIOTELEPHONIQUES MOBILES

(30) Priority: 18.08.1992 SE 9202368
(43) Date of publication of application: 03.08.1994
(73) Proprietor: TELIA AB, 123 86 Farsta (SE)
(72) Inventor: STJERNHOLM, Paul, S-136 80 Haninge (SE)
(74) Representative: Akerman, Marten Lennart
(86) International application number: SE9300576
(87) International publication number: WO9405099

(56) References cited:
- EP-A- 0 431 956
- EP-A- 0 528 522
- US-A- 4 550 443

## Description

### FIELD OF THE INVENTION

The present invention relates to a method for measuring coverage in mobile telephone networks. Coverage measurements of base stations in a mobile telephone network are carried out in such a manner that the operator of the network obtains knowledge about the range of radio coverage of the base stations. In the invention, synchronized signal strength measurements in the uplink are utilised for minimising capacity losses and loss of income in the network due to the fact that only one frequency needs to be utilised for the measurement.

### PRIOR ART

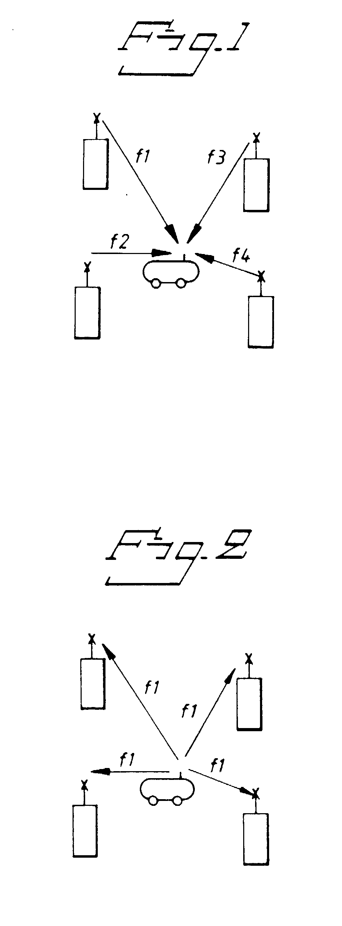

Measuring the range of coverage of base stations is nowadays carried out by a mobile measuring station measuring the signal strength in one channel per base station in the downlink (base station to mobile station), see Figure 1. The measuring station registers signal strength, signal identity and current position. These data are used as the basis for the coverage diagrams for the respective base stations. To be able to measure the signal strength from a base station down to noise level, all channel units in the same channel and all channel units in adjacent channels must be shut down within a large geographic area in order to reduce potential interference during the measurements. If several base stations are measured at the same time a not inconsiderable number of channel units must be shut down. A problem is that capacity is lost in the network and, with that, the incomes from calls are also reduced. These measurements are therefore normally carried out during the night, when the traffic load is low and is carried by a limited number of base stations.

A method according to the preamble of claim 1 is known from EP-A-431 956.

### SUMMARY OF THE INVENTION

The present invention provides a method for measuring coverage in mobile telephone networks, which solves the above-mentioned problems. According to the invention fixed measuring stations located in base stations measure signal strength and signal identity from a mobile transmitter station. The mobile transmitter station transmits at a single frequency and moves over the current area until the surface coverage is considered to be adequate. The mobile transmitter station registers its position during its movement through the area. The fixed measuring stations obtain a reference between measurement result and position, such that the network operator obtains knowledge about the radio coverage of the base stations.

### BRIEF DESCRIPTION OF THE DRAWINGS

The invention is described in detail below with reference to the attached drawing, wherein
Figure 1 shows a coverage measurement in the downlink according to the prior art, and
Figure 2 shows a coverage measurement in the uplink according to the present invention.

### DETAILED DESCRIPTION OF PREFERRED EMBODIMENTS

Figure 1 shows how a coverage measurement is carried out today. As mentioned above, the measurement is carried out in the downlink, that is to say from the base station to the mobile, whereby separate frequencies f1, f2, f3, f4 and so forth are occupied for each base station so that the mobile station will be able to carry out the measurement without interference and with knowledge of the identities of the base stations.

According to the present invention, the coverage measurement is carried out on the uplink, that is to say mobile station to base. The measuring stations are in this case located in the base stations. The measuring stations measure the signal strength and signal identity from a mobile transmitter station, which transmits on a single frequency f1, that is to say only one channel is utilised. The total capacity loss is limited to one to three channels - the channel on which the measurement is carried out and possibly one to two adjacent channels. The channels in question can be selected freely and preferably in such a manner that channels which are poorly utilised in the network are used. If the measurement can be located outside the frequency band used by the radio network, the capacity loss is avoided.

The mobile station regularly registers its position. The measuring stations obtain a reference between the measurement result and the current position. The mobile station moves over the current area until the surface coverage is considered to be adequate.

The advantage with the method according to the invention is thus a diminished loss of capacity in the network during the measurement, which provides a lower loss of income from calls. This is economically advantageous. The limited capacity loss also means that these measurements can be carried at other times than during the night and over several base stations for each measuring cycle.

The invention is only limited by the patent claims below.

## Claims

1. Method for measuring coverage in mobile telephone networks, wherein fixed measuring stations located in base stations measure signal strength and signal identity from a mobile transmitter station, which mobile transmitter station transmits at a single frequency, characterised in that the mobile transmitter station moves over the current area until the surface coverage is considered to be adequate, in that the mobile transmitter station registers its position during its movement through the area and in that the fixed measuring stations obtain a reference between measurement result and position, such that the network operator obtains knowledge about the radio coverage of the base stations.

## Patentansprüche

1. Verfahren zur Messung der Abdeckung in Mobiltelefon-Netzwerken, wobei in Basisstationen angeordnete feste Meß-Stationen die Signal stärke und die Signalidentität von einer mobilen Übertragungsstation messen, wobei die mobile Übertragungsstation auf einer einzelnen Signalfrequenz sendet,
dadurch **gekennzeichnet**, daß
die mobile Übertragungsstation sich über das aktuelle Gebiet bewegt, bis die Oberflächenabdeckung für geeignet befunden wird,
daß die mobile Übertragungsstation während der Bewegung durch das Gebiet ihre Position registriert, und
daß die festen Meß-Stationen einen Bezug zwischen dem Meßergebnis und der Position herstellen, so daß der Netzwerkbetreiber Kenntnis bezüglich der Radioabdeckung der Basisstationen erhält.

## Revendications

1. Méthode pour mesurer la couverture dans les réseaux de téléphone mobile, dans laquelle des stations de mesure fixes déposées dans des stations de base mesurent l'amplitude d'impulsion et l'identité du signal à partir d'une station de transmission mobile, laquelle station de transmission transmet à une fréquence unique, caractérisée en ce que la station de transmission mobile se déplace dans la zone courante jusqu'à ce que la couverture de surface est considérée comme étant adéquate, en ce que la station de transmission mobile enregistre sa position au cours de ses mouvements à travers la zone et en ce que les stations de mesure fixes obtiennent une référence entre le résultat de la mesure et la position, de sorte que l'opérateur du réseau a une connaissance sur la couverture radio des stations de base.
